# EUROPÄISCHE PATENTSCHRIFT

(11) **EP 3 153 763 B1**
(45) Veröffentlichungstag und Bekanntmachung des Hinweises auf die Patenterteilung: **12.09.2018**
(21) Anmeldenummer: 16181792.9
(22) Anmeldetag: 28.07.2016
(51) Int. Cl.: F16P 3/08, E05C 19/16

(54) **SICHERHEITSSCHALTER ZUM ÜBERWACHEN EINES AUS EINEM ORTSFESTEN UND EINEM BEWEGBAREN TEIL BESTEHENDEN ZUGANGS EINES AUTOMATISIERUNGSSYSTEMS**
SAFETY SWITCH FOR MONITORING ACCESS TO AN AUTOMATION SYSTEM MADE OF A A FIXED AND MOVABLE PART
COMMUTATEUR DE SECURITE DESTINE A SURVEILLER UN ACCES FIXE ET UN ACCES EN PARTIE MOBILE D'UN SYSTEME D'AUTOMATISATION

(30) Priorität: 05.10.2015 DE 102015116898
(43) Veröffentlichungstag der Anmeldung: 12.04.2017
(73) Patentinhaber: SICK AG, 79183 Waldkirch (DE)
(72) Erfinder: Schwarz, Herr Adrian, 79215 Elzach (DE); Saycon, Omar, 791405 Singapur (SG); Lin, Tun Tun, 751339 Singapur (SG)

(56) Entgegenhaltungen:
- EP-A1- 2 871 402
- DE-A1- 19 503 863
- DE-U1- 9 304 400
- US-A1- 2010 218 569

## Beschreibung

Die vorliegende Erfindung betrifft einen Sicherheitsschalter zum Überwachen eines aus einem ortsfesten und einem bewegbaren Teil bestehenden Zugangs eines Automatisierungssystems gemäß dem Oberbegriff des Anspruchs 1.

Herkömmliche Zugänge, die aus dem ortsfesten Teil, wie z. B. Maschinengestell, Türgestell, Türrahmen, Maschinenplatte oder Haltewinkel, und dem bewegbaren Teil, wie z. B. Türen, Klappen oder Hauben, bestehen und zusammen einen sicheren Zugang zu dem Automatisierungssystem gewährleisten, müssen durch Sicherheitsschalter auf ihren Zustand, Offen oder Geschlossen, überwacht werden.

Eine solche Überwachung wird zum einen durch elektromechanische oder zum anderen durch berührungslose Sicherheitsschalter realisiert. Hierbei besteht die Anforderung einer sicheren Positionsüberwachung des bewegbaren Teils zu dem ortsfesten Teil des Zugangs und gegebenenfalls einer Zuhaltung der beiden Teile zu detektieren und an eine übergeordnete speicherprogrammierbare Steuerung SPS zu kommunizieren. Die hierfür verwendeten Sicherheitsschalter umfassen einen Sensorteil, der ortsfest an dem ortsfesten Teil des Zugangs montiert ist, und einen Geberteil, der an dem bewegbaren Teil des Zugangs montiert ist. Wenn der Zugang geschlossen ist, befindet sich der Geberteil direkt gegenüber dem Sensorteil, so dass der Sensorteil ein Signal des Geberteils erfassen und gegebenenfalls als Freigabesignal an die SPS kommunizieren kann, damit das Automatisierungssystem starten kann.

Im geöffneten Zustand des Zugangs befindet sich der Geberteil beabstandet vom Sensorteil, so dass der Sensorteil kein Signal erfassen und auch kein Freigabesignal an die SPS kommunizieren kann. Dadurch wird das Automatisierungssystem für einen Betrieb nicht freigegeben oder, wenn sich das Automatisierungssystem bereits im Betrieb befindet, in einen sicheren Zustand überführt.

Solch ein Sicherheitsschalter mit den Merkmalen des Oberbegriffs des Anspruchs 1 ist aus EP 2 871 402 A1 bekannt.

Durch die Montage der Sensor- und Geberteile an den Teilen des Zugangs ergeben sich große Störkanten im Bereich des Zugangs. Ferner besteht das Risiko einer Manipulation des Sicherheitsschalters durch Anbringung eines einzelnen, nicht an dem bewegbaren Teil des Zugangs montierten Geberteils an dem Sensorteil, so dass ein geschlossener Zustand des Zugangs vorgetäuscht wird.

Es ist eine Aufgabe der vorliegenden Erfindung, einen Sicherheitsschalter zum Überwachen eines aus einem ortsfesten und einem bewegbaren Teil bestehenden Zugangs eines Automatisierungssystems derart zu verbessern, dass eine Manipulation eines geschlossenen Zustandes des Zugangs vermieden werden.

Die Aufgabe wird erfindungsgemäß durch einen Sicherheitsschalter zum Überwachen eines aus einem ortsfesten und einem bewegbaren Teil bestehenden Zugangs eines Automatisierungssystems mit den Merkmalen des Anspruchs 1 gelöst.

Gemäß einem bevorzugten Ausführungsbeispiel umfasst das erste Magnetelement einen Elektromagnet, einen Permanentmagnet oder einen Magnetanker. Ferner umfasst das zweite Magnetelement vorteilhafterweise einen Magnetanker, einen Elektromagnet oder einen Permanentmagnet.

Gemäß einem weiteren bevorzugten Ausführungsbeispiel ist in dem geschlossenen Zustand des Zugangs der Signalgeber gegenüberliegend dem Signalempfänger angeordnet und die Auswerteeinheit empfängt in dieser geschlossenen Stellung ein Signal.

Gemäß einem weiteren bevorzugten Ausführungsbeispiel befindet sich in einem offenen Zustand des Zugangs der Signalgeber beabstandet vom Signalempfänger und die Auswerteeinheit empfängt in dieser offenen Stellung kein Signal, so dass das Automatisierungssystem in einen sicheren Zustand bringbar ist.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnungen im Einzelnen erläutert. In den Zeichnungen zeigen:
- Fig. 1: eine schematische Darstellung eines Zugangs eines Automatisierungssystems;
- Fig. 2: eine schematische Großansicht eines erfindungsgemäßen Sicherheitsschalters.

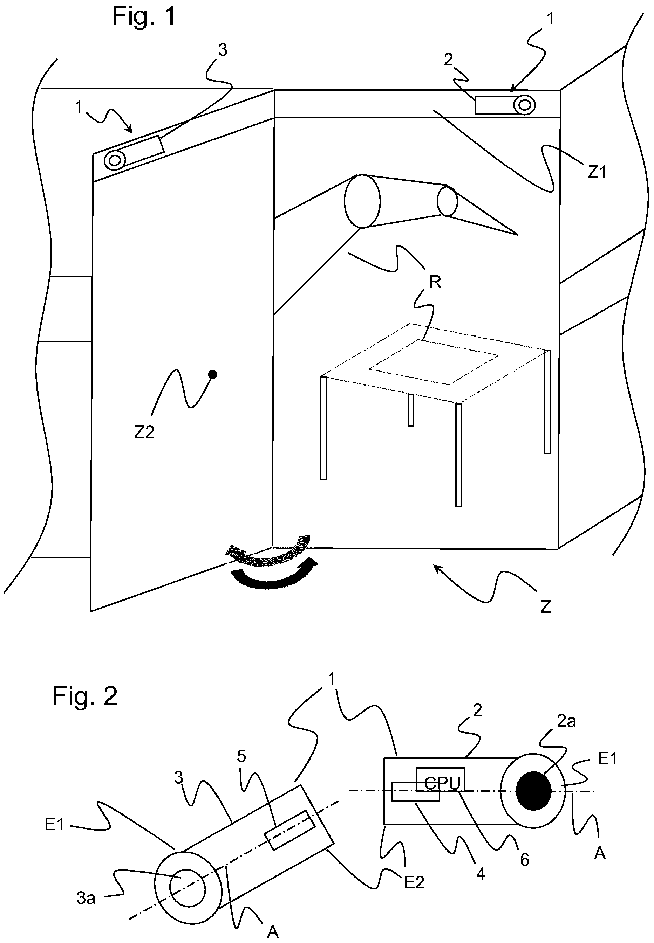

In der Figur 1 ist schematisch ein Zugang Z zu einem Automatisierungssystem R gezeigt, der aus einem ortsfesten Teil Z1 in Form einer Wand oder eines Schutzzauns und aus einem bewegbaren Teil Z2 in Form einer Tür besteht. Der Zugang Z dient dazu, einen Zutritt einer Person zu dem Automatisierungssystem R während eines Betriebs zu verhindern oder das Automatisierungssystem R in einen sicheren Zustand gegenüber der Person zu bringen. Der ortsfeste und bewegbare Teil Z1 und Z2 des Zugangs Z weisen jeweils einen endlich breiten Rahmen auf, in denen jeweils ein Gehäuseteil 2 und 3 eines erfindungsgemäßen Sicherheitsschalters 1 montiert ist, wobei der erfindungsgemäße Sicherheitsschalter 1 vorgesehen ist, um einen geschlossen oder offenen Zustand des Zugangs Z zu überwachen.

Hierbei ist der erfindungsgemäße Sicherheitsschalter 1 in der Lage zu erfassen, ob der Zugang Z offen, d. h. der bewegbare Teil Z2 des Zugangs Z ist beabstandet zu dem ortsfesten Teil Z1 des Zugangs Z, oder geschlossen, d.h. der bewegbare Teil Z2 des Zugangs Z ist direkt gegenüber dem ortsfesten Teil Z1 des Zugangs Z angeordnet, ist.

Der Sicherheitsschalter 1 weist ein erstes und ein zweites Gehäuseteil 2 und 3 auf, wobei das erste und zweite Gehäuseteil 2 und 3 jeweils mit einer länglichen, vorzugsweise quaderförmigen, Form versehen ist. Das erste und zweite Gehäuseteil 2 und 3 sind formschlüssig zueinander ausgebildet.

Das erste Gehäuseteil 2 des Sicherheitsschalters 1 ist im Rahmen des ortsfesten Teils Z1 des Zugangs Z montiert und das zweite Gehäuseteil 3 des Sicherheitsschalters 1 ist im Rahmen des bewegbaren Teils Z2 des Zugangs Z montiert. Hierdurch bildet der Sicherheitsschalter 1 bzw. die Gehäuseteile 2 und 3 des Sicherheitsschalters 1 keine Störkontur an dem Zugang Z, da der Sicherheitsschalter 1 bzw. die Gehäuseteile 2 und 3 des Sicherheitsschalters 1 sozusagen integriert in den Rahmen des Zugangs Z angeordnet ist bzw. sind.

Figur 2 stellt eine schematische Großansicht des erfindungsgemäßen Sicherheitsschalters 1 in Detail dar, wobei das erste und zweite Gehäuseteil 2 und 3 zum besseren Verständnis unmittelbar nebeneinander abgebildet sind.

Das erste Gehäuseteil 2 weist an einem ersten Ende E1 der länglichen Form ein erstes Magnetelement 2a auf, wobei vorzugsweise das erste Magnetelement 2a einen Elektromagnet, einen Permanentmagnet oder einen Magnetanker umfasst. An einem zweiten Ende E2 der länglichen Form weist das erste Gehäuseteil 2 einen Signalempfänger 4 und eine Auswerteeinheit 6 auf.

Das zweite Gehäuseteil 3 weist an einem ersten Ende E1 der länglichen Form ein zweites Magnetelement 3a auf, wobei vorzugsweise das zweite Magnetelement 3a ebenfalls einen Elektromagnet, einen Permanentmagnet oder einen Magnetanker umfasst. An einem zweiten Ende E2 der länglichen Form weist das zweite Gehäuseteil 3 einen Signalgeber 5 auf.

Hierbei ist eine Zuordnung der erwähnten Elemente, Magnetelemente 2a und 3a, Signalempfänger 4, Auswerteeinheit 6 und Signalgeber 5, zu dem ersten und zweiten Gehäuseteile 2 und 3 auch vice versa möglich. D.h . das erste Gehäuseteil 2 weist den Signalgeber 5 auf und das zweite Gehäuseteil 3 weist den Signalempfänger 4 und die Auswerteeinheit 6 auf.

Insbesondere, wenn das erste Magnetelement 2a des ersten Gehäuseteils 2 den Elektromagnet oder den Permanentmagnet umfasst, umfasst das zweite Magnetelement 3a des zweiten Gehäuseteils 3 den Magnetanker, oder vice versa.

In einem geschlossenen Zustand des Zugangs Z befinden sich das erste und zweite Magnetelement 2a und 3a gegenüberliegend. Dadurch sind das erste und zweite Magnetelement 2a und 3a miteinander magnetisch wirksam und eine magnetische Zuhaltekraft ist messbar, die das bewegbare Teil Z2 des Zugangs Z zu dem ortsfesten Teil Z1 des Zugangs Z festhält. In dem geschlossenen Zustand des Zugangs Z empfängt der Signalempfänger 4 ein Signal des Signalgebers 5, so dass die Auswerteeinheit 6 ein Signal, das den geschlossenen Zustand des Zugangs Z repräsentiert, an eine übergeordnete speicherprogrammierbare Steuerung SPS kommuniziert. Die SPS kann unter anderem auf Basis des Signals der Auswerteeinheit 6 den Betrieb des Automatisierungssystems R freigeben.

Vorteilhafterweise kann der Sicherheitsschalter 1 diese Funktionalität der SPS aufweisen, d. h. die Auswerteeinheit 6 des Sicherheitsschalters 1 gibt den Betrieb des Automatisierungssystems R frei, wenn der Zugang Z geschlossen ist, oder führt das Automatisierungssystem R in einen sicheren Zustand, wenn der Zugang Z offen ist bzw. geöffnet wird.

Das erste und zweite Gehäuseteil 2 und 3 des Sicherheitsschalters 1 weist jeweils eine Längsachse A auf, die entlang der länglichen Form des ersten bzw. des zweiten Gehäuseteils 2 und 3 verläuft.

Hierbei sind das erste und zweite Gehäuseteil 2 und 3 erfindungsgemäß derart in den ortsfesten und bewegbaren Teilen Z1 und Z2 des Zugangs Z angeordnet, dass sich die Längsachse A des ersten und zweiten Gehäuseteils 2 und 3 in einer horizontalen Lage befindet. D.h. die längliche Form des ersten und zweiten Gehäuseteils 2 und 3 sind jeweils waagerecht in den Rahmen des Zugangs Z montiert.

Durch die horizontale Anordnung der ersten und zweiten Gehäuseteile 2 und 3 des Sicherheitsschalters 1 greift an beiden ersten und zweiten Enden E1 und E2 der ersten und zweiten Gehäuseteile 2 und 3 jeweils eine Gewichtskraft an. Die Gewichtskraft wird durch die Rahmen des Zugangs Z kompensiert.

Vorteilhafterweise ist die magnetische Haltekraft der ersten und zweiten Magnetelemente 2a und 3a kleiner als ein Drehmoment des länglichen ersten und zweiten Gehäuseteils 2 und 3 ausgelegt, wobei das Drehmoment sich aus der Gewichtskraft an dem zweiten Ende E2 des ersten bzw. zweiten Gehäuseteils 2 bzw. 3 mit dem Signalempfänger 4 und der Auswerteeinheit 6 bzw. dem Signalgeber 5 und einem Hebelarm aus einem Abstand zwischen dem zweiten Ende E2 des ersten bzw. zweiten Gehäuseteils 2 bzw. 3 zu dem ersten Ende E1 des ersten bzw. zweiten Gehäuseteils 2 bzw. 3 mit dem jeweiligen Magnetelement 2a bzw. 3a bildet.

D. h. an dem ersten Ende E1 der ersten und zweiten Gehäuseteile 2 und 3 des Sicherheitsschalters 1 werden die Gehäuseteile 2 und 3 durch die magnetische Haltekraft der ersten und zweiten Magnetelemente 2a und 3a zueinander gehalten. An dem zweiten Ende E2 der ersten und zweiten Gehäuseteile 2 und 3 des Sicherheitsschalters 1 wirkt das Drehmoment aufgrund der horizontalen Anbringung der ersten und zweiten Gehäuseteile 2 und 3 in den Rahmen des Zugangs Z. Dieses Drehmoment wird durch die Rahmen des Zugangs kompensiert.

Wird im Falle einer Manipulation des Sicherheitsschalters 1 das für das bewegbare Teil Z2 des Zugangs Z vorgesehene Gehäuseteil 3 bzw. 2 des Sicherheitsschalters 1 alleine, d.h. ohne in dem bewegbaren Teil Z2 des Zugangs Z montiert zu sein, an dem für das ortsfeste Teil Z1 des Zugangs Z vorgesehene Gehäuseteil 2 bzw. 3 des Sicherheitsschalters 1 angebracht, so werden die beiden Gehäuseteile 2 und 3 durch die magnetische Zuhaltekraft an dem ersten Ende E1 der ersten und zweiten Gehäuseteile 2 und 3 zueinander gehalten. Das vorhandene Drehmoment an dem zweiten Ende E2 des ohne am Rahmen des Zugangs Z montierten Gehäuseteils 3 bzw. 2 des Sicherheitsschalters 1 bewirkt jedoch eine Drehung des Gehäuseteils 3 bzw. 2 gegenüber der horizontalen Lage und gegenüber dem im Rahmen montierten Gehäuseteil 2 bzw. 3 des Sicherheitsschalters 1 in einer senkrechten Lage der Längsachse des ohne am Rahmen des Zugangs Z montierten Gehäuseteils 3 bzw. 2.

Hierdurch bewegt sich der Signalgeber 5 in dem ohne am Rahmen des Zugangs Z montierten Gehäuseteil 3 bzw. 2 von dem Signalempfänger 4 des im ortsfesten Rahmen des Zugangs Z montierten Gehäuseteils 2 bzw. 3 weg, so dass kein Signal mehr empfangen werden kann. Die Auswerteeinheit 6 bestimmt deshalb einen offenen Zustand des Zugangs Z, obwohl mit der Anbringung des ohne am Rahmen des Zugangs Z montierten Gehäuseteils 3 bzw. 2 ein geschlossener Zustand des Zugangs Z manipuliert werden sollte.

Dadurch ist eine Manipulation des Sicherheitsschalters 1 ausschließbar.

### Bezugszeichenliste

- 1: Sicherheitsschalter
- 2: Erstes Gehäuseteil
- 2a: Erstes Magnetelement
- 3: Zweites Gehäuseteil
- 3a: Zweites Magnetelement
- 4: Signalempfänger
- 5: Signalgeber
- 6: Auswerteeinheit
- A: Längsachse
- E1: Erstes Ende
- E2: Zweites Ende
- R: Automatisierungssystem
- Z: Zugang
- Z1: Ortsfestes Teil des Zugangs
- Z2: Bewegbares Teil des Zugangs

## Patentansprüche

1. Sicherheitsschalter (1) zum Überwachen eines aus einem ortsfesten und einem bewegbaren Teil (Z1, Z2) bestehenden Zugangs (Z) eines Automatisierungssystems (R), wobei der Sicherheitsschalter (1) ein erstes Gehäuseteil (2) mit einer länglichen, vorzugsweise quaderförmigen, Form und ein zweites Gehäuseteil (3) mit einer zu dem ersten Gehäuseteil (2) formschlüssigen Form aufweist, das erste Gehäuseteil (2) ein erstes Magnetelement (2a) und das zweite Gehäuseteil (3) ein zweites Magnetelement (3a) aufweisen, das erste Gehäuseteil (2) ortsfest in dem ortsfesten Teil (Z1) des Zugangs (Z) anordenbar ist und das zweite Gehäuseteil (3) in dem bewegbaren Teil (Z2) des Zugangs (Z) anordenbar ist, so dass in einem geschlossenen Zustand des Zugangs (Z) sich die Magnetelemente (2a, 3a) gegenüberliegend befinden, die Magnetelemente (2a, 3a) miteinander magnetisch wirksam sind, und eine magnetische Zuhaltekraft messbar ist, wobei das erste Gehäuseteil (2) einen Signalempfänger (4) und eine Auswerteeinheit (6) und das zweite Gehäuseteil (3) einen Signalgeber (5) aufweisen oder vice versa, **dadurch gekennzeichnet, dass** an einem ersten Ende (E1) der länglichen Form des ersten bzw. des zweiten Gehäuseteils (2, 3) das erste bzw. das zweite Magnetelement (2a, 3a) vorgesehen ist und an einem zweiten Ende (E2) der länglichen Form des ersten bzw. des zweiten Gehäuseteils (2, 3) der Signalempfänger (4) bzw. der Signalgeber (5) vorgesehen ist und wobei im bestimmungsgemäßen Gebrauch das erste und zweite Gehäuseteil (2, 3) derart in den ortsfesten und bewegbaren Teilen (Z1, Z2) des Zugangs (Z) anordenbar sind, dass sich eine Längsachse (LA) des ersten und zweiten Gehäuseteils (2, 3) in einer horizontalen Lage befindet, wobei die magnetische Zuhaltekraft der Magnetelemente (2a, 3a) auf das erste Ende (E1) der länglichen Form des ersten und des zweiten Gehäuseteils (2, 3) kleiner als ein Drehmoment ausgelegt ist, das Drehmoment an dem zweiten Ende (E2) des ersten und zweiten Gehäuseteils (2, 3) aufgrund der horizontalen Lage wirkt und das Drehmoment sich aus einer Gewichtskraft an dem zweiten Ende (E2) des ersten bzw. zweiten Gehäuseteils (2, 3) mit dem Signalempfänger (4) und der Auswerteeinheit (6) bzw. dem Signalgeber (5) und einem Hebelarm aus einem Abstand zwischen dem zweiten Ende (E2) des ersten bzw. des zweiten Gehäuseteils (2, 3) zu dem ersten Ende (E1) des ersten bzw. des zweiten Gehäuseteils (2, 3) mit dem jeweiligen Magnetelement (2a, 3a) bildet.

2. Sicherheitsschalter (1) nach Anspruch 1, **dadurch gekennzeichnet, dass** das erste Magnetelement (2a) einen Elektromagnet, einen Permanentmagnet oder einen Magnetanker umfasst.

3. Sicherheitsschalter (1) nach Anspruch 1 oder 2, **dadurch gekennzeichnet, dass** das zweite Magnetelement (3a) einen Magnetanker, einen Elektromagnet oder einen Permanentmagnet umfasst.

4. Sicherheitsschalter (1) nach einem der vorhergehenden Ansprüche, **dadurch gekennzeichnet, dass** in dem geschlossenen Zustand des Zugangs (Z) der Signalgeber (5) gegenüberliegend dem Signalempfänger (4) angeordnet ist und die Auswerteeinheit (6) in dieser geschlossenen Stellung ein Signal empfängt.

5. Sicherheitsschalter (1) nach einem der vorhergehenden Ansprüche, **dadurch gekennzeichnet, dass** in einem offenen Zustand des Zugangs (Z) der Signalgeber (5) sich beabstandet vom Signalempfänger (4) befindet und die Auswerteeinheit (6) in dieser offenen Stellung kein Signal empfängt, so dass das Automatisierungssystem (R) in einen sicheren Zustand bringbar ist.

## Claims

1. Safety switch (1) for monitoring an access (Z) of an automation system (R) consisting of a stationary and a movable part (Z1, Z2), wherein the safety switch (1) comprises a first housing part (2) with an elongated, preferably cuboid, shape and a second housing part (3) comprises a shape form-fitted with respect to the first housing part (2), the first housing part (2) comprises a first magnet element (2a) and the second housing part (3) comprises a second magnet element (3a), the first housing part (2) is arranged in a fixed position in the stationary part (Z1) of the access (Z) and the second housing part (3) is arranged in the movable part (Z2) of the access (Z), so that in a closed state of the access (Z), the magnetic elements (2a, 3a) are located opposite one another, the magnetic elements (2a, 3a) are magnetically effective with each other, and a magnetic clamping force is measurable, wherein the first housing part (2) comprises a signal receiver (4) and an evaluation unit (6) and the second housing part (3) have a signal generator (5) or vice versa, **characterized in that** at a first end (E1) of the elongated shape of the first and accordingly the second housing part (2, 3) the first and accordingly the second magnetic element (2a, 3a) is provided and at a second end (E2) of the elongated shape of the first and accordingly the second housing part (2, 3) the signal receiver (4) or the signal generator (5) is provided and wherein, when used as intended, the first and second housing part (2, 3) are arranged in such a way in the stationary and movable parts (Z1, Z2) of the access (Z) that a longitudinal axis (LA) of the first and second housing part (2, 3) is in a horizontal position, wherein the magnetic closing force of the magnetic elements (2a, 3a) on the first end (E1) of the elongated shape of the first and the second housing part (2, 3) is designed smaller than a torque, the torque acts at the second end (E2) of the first and second housing parts (2, 3) due to the horizontal position and the torque is formed from a weight force at the second end (E2) of the first and accordingly second housing part (2, 3) with the signal receiver (4) and the evaluation unit (6) or the signal generator (5) and a lever arm from a distance between the second end (E2) of the first and accordingly the second housing part (2, 3) to the first end (E1) of the first and accordingly the second housing part (2, 3) with the respective magnetic element (2a, 3a).

2. Safety switch (1) according to claim 1, **characterized in that** the first magnetic element (2a) comprises an electromagnet, a permanent magnet or a magnet armature.

3. Safety switch (1) according to claim 1 or 2, **characterized in that** the second magnetic element (3a) comprises a magnet armature, an electromagnet or a permanent magnet.

4. Safety switch (1) according to one of the preceding claims, **characterized in that** in the closed state of the access (Z) of the signal generator (5) opposite the signal receiver (4) is arranged and the evaluation unit (6) in this closed position a signal receives.

5. Safety switch (1) according to one of the preceding claims, **characterized in that** in an open state of access (Z) of the signal generator (5) is spaced from the signal receiver (4) and the evaluation unit (6) in this open position no signal receives, so that the automation system (R) can be brought into a safe state.

## Revendications

1. Interrupteur de sécurité (1) pour surveiller un accès (Z) d'un système d'automatisation (R) constitué d'une partie fixe et d'une partie mobile (Z1, Z2), dans lequel l'interrupteur de sécurité (1) comprend une première partie de boîtier (2) de forme allongée, de préférence cubique, et une seconde partie de boîtier (3) comprend une forme adaptée par rapport à la première partie de boîtier (2), la première partie de boîtier (2) comprend un premier élément magnétique (2a) et la deuxième partie de boîtier (3) comprend un deuxième élément magnétique (3a), la première partie de boîtier (2) est disposée dans une position fixe dans la partie fixe (Z1) de l'accès (Z) et la deuxième partie de boîtier (3) est disposée dans la partie mobile (Z2) de l'accès (Z), de sorte que dans un état fermé de l'accès (Z), les éléments magnétiques (2a, 3a) se trouvent en face les uns des autres, les éléments magnétiques (2a, 3a) sont magnétiquement efficaces les uns avec les autres, et une force de serrage magnétique est mesurable, dans laquelle la première partie de boîtier (2) comprend un récepteur de signaux (4) et une unité d'évaluation (6) et la seconde partie de boîtier (3) ont un générateur de signaux (5) ou vice versa, **caractérisé en ce qu'**à une première extrémité (E1) de la forme allongée de la première et donc de la seconde partie de boîtier (2, 3), le premier et en conséquence le second élément magnétique (2a), 3a) est prévu et à une deuxième extrémité (E2) de la forme allongée de la première et donc de la deuxième partie de boîtier (2, 3), le récepteur de signaux (4) ou le générateur de signaux (5) est prévu et dans lequel, lorsqu'il est utilisé comme prévu, la première et la deuxième partie de boîtier (2, 3) sont disposées de telle manière dans les parties fixes et mobiles (Z1), Z2) de l'accès (Z) qu'un axe longitudinal (LA) de la première et de la deuxième partie de boîtier (2, 3) se trouve dans une position horizontale, la force de fermeture magnétique des éléments magnétiques (2a, 3a) sur la première extrémité (E1) de la forme allongée de la première et de la deuxième partie de boîtier (2), 3) est conçu plus petit qu'un couple, le couple agit à la deuxième extrémité (E2) de la première et deuxième partie de boîtier (2, 3) en raison de la position horizontale et le couple est formé d'une force de poids à la deuxième extrémité (E2) de la première et donc de la deuxième partie de boîtier (2), 3) avec le récepteur de signaux (4) et l'unité d'évaluation (6) ou le générateur de signaux (5) et un bras de levier à partir d'une distance entre la deuxième extrémité (E2) de la première et donc de la deuxième partie de boîtier (2, 3) jusqu'à la première extrémité (E1) de la première et donc de la deuxième partie de boîtier (2, 3) avec l'élément magnétique respectif (2a, 3a).

2. Interrupteur de sécurité (1) selon la revendication 1, **caractérisé en ce que** le premier élément magnétique (2a) comprend un électro-aimant, un aimant permanent ou une armature magnétique.

3. Interrupteur de sécurité (1) selon la revendication 1 ou 2, **caractérisé en ce que** le deuxième élément magnétique (3a) comprend une armature magnétique, un électro-aimant ou un aimant permanent.

4. Interrupteur de sécurité (1) selon l'une des revendications précédentes, **caractérisé en ce que** dans l'état fermé de l'accès (Z), le générateur de signaux (5) est disposé à l'opposé du récepteur de signaux (4) et l'unité d'exploitation (6) reçoit un signal dans cette position fermée.

5. Interrupteur de sécurité (1) selon l'une des revendications précédentes, **caractérisé en ce que** dans un état ouvert d'accès (Z), le générateur de signaux (5) est espacé du récepteur de signaux (4) et l'unité d'évaluation (6) dans cette position ouverte ne reçoit aucun signal, de sorte que le système d'automatisation (R) peut être amené dans un état sûr.
